# EUROPÄISCHE PATENTANMELDUNG

(11) **EP 2 626 848 A1**
(43) Veröffentlichungstag der Anmeldung: **14.08.2013**
(21) Anmeldenummer: 13153993.4
(22) Anmeldetag: 05.02.2013
(51) Int. Cl.: G09B 9/46, G09B 9/12

(54) **Flugsimulatorvorrichtung**

(30) Priorität: 07.02.2012 DE 102012201772
(71) Anmelder: KUKA Roboter GmbH, 86165 Augsburg (DE)
(72) Erfinder: Buchstab, Alois, 86391 Stadtbergen (DE)
(74) Vertreter: Patentanwälte Funk & Böss GbR

(57) **Zusammenfassung**

Die Erfindung betrifft eine Flugsimulatorvorrichtung (1, 51) zum Simulieren eines Flugverhalten eines Flugzeugs. Die Flugsimulatorvorrichtung (1, 51) umfasst eine Eingabemittel aufweisende Personenaufnahme (6) zur Aufnahme zumindest einer Person (P), ein omnidirektional bewegbares Trägerfahrzeug (2) mit mehreren Rädern (4) und mit Antrieben zum Antreiben der Räder (4), und eine mit den Eingabemitteln und den Antrieben des Trägerfahrzeugs (2) verbundene Steuervorrichtung (5), welche eingerichtet ist, aufgrund von von den Eingabemitteln stammenden Signalen die Antriebe der Trägervorrichtung (2) anzusteuern.

## Beschreibung

Die Erfindung betrifft eine Flugsimulatorvorrichtung, insbesondere eine Drehflügelflugzeugsimulatorvorrichtung.

Die WO 2005/109375 A1 offenbart einen Flugsimulator zu Trainingszwecken. Der Flugsimulator umfasst einen Hexapoden mit sechs Freiheitsgraden, eine am Hexapoden befestigte Kabine und eine mit dem Hexapoden verbundene Steuervorrichtung zum Antreiben des Hexapoden.

Aufgabe der Erfindung ist es, eine verbesserte Flugsimulatorvorrichtung insbesondere zum Simulieren eines Drehflügelflugzeugs anzugeben.

Die Aufgabe der Erfindung wird gelöst durch eine Flugsimulatorvorrichtung zum Simulieren eines Flugverhaltens eines Flugzeugs, aufweisend
- eine Eingabemittel aufweisende Personenaufnahme zur Aufnahme zumindest einer Person,
- ein omnidirektional bewegbares Trägerfahrzeug mit mehreren Rädern und mit Antrieben zum Antreiben der Räder, und
- eine mit den Eingabemitteln und den Antrieben des Trägerfahrzeugs verbundene Steuervorrichtung, welche eingerichtet ist, aufgrund von von den Eingabemitteln stammenden Signalen die Antriebe der Trägervorrichtung anzusteuern.

Die erfindungsgemäße Flugsimulatorvorrichtung ist vorgesehen, einer Person die Möglichkeit zu verschaffen, das Flugverhalten eines Flugzeugs zu simulieren. Damit wird es der Person ermöglicht, ohne das zu simulierende Flugzeug zu benützen, dessen Flugverhalten kennen zu lernen, z.B. für Trainingszwecke. Die erfindungsgemäße Flugsimulatorvorrichtung ist insbesondere vorgesehen, das Flugverhalten eines Drehflügelflugzeugs, z.B. eines Helikopters, zu simulieren. Die erfindungsgemäße Simulationsvorrichtung umfasst die Personenaufnahme mit den Eingabemitteln. Die Personenaufnahme ist insbesondere dem Führerstand des zu simulierenden Flugzeugs angepasst, d.h. die Eingabemittel sind an die Bedien- und gegebenenfalls auch den Anzeigemittel des zu simulierenden Flugzeugs, die sich in dessen Führerstand befinden und zum Steuern des zu simulierenden Flugzeugs nötig sind, angepasst. Auch kann die Personenaufnahme einen Sitz umfassen, der dem Sitz des Führerstandes des zu simulierenden Flugzeugs entspricht. Die Personenaufnahme kann insbesondere als Hubschrauberzelle ausgeführt sein.

Die Eingabemittel sind mit der Steuervorrichtung verbunden. Auf dieser läuft z.B. ein Rechenprogramm, mittels dem die Steuervorrichtung die von den Eingabemitteln stammenden Signale auswertet, um daraufhin die Antriebe des Trägerfahrzeugs derart anzusteuern, sodass das Trägerfahrzeug eine der Eingabe mittels der Eingabemittel entsprechende Bewegung durchführt. Dadurch bewegt sich die Personenaufnahme mit, die zumindest indirekt am Trägerfahrzeug befestigt ist. Die Antriebe des Trägerfahrzeugs sind insbesondere elektrische Antriebe, vorzugsweise geregelte elektrische Antriebe.

Erfindungsgemäß ist das Trägerfahrzeug als ein omnidirektional bewegbares Trägerfahrzeug ausgeführt. Vorzugsweise sind daher die Räder des Trägerfahrzeugs als omnidirektionale Räder ausgebildet. Ein Beispiel eines omnidirektionalen Rades ist das dem Fachmann bekannte Mecanum-Rad. Aufgrund der omnidirektionalen Räder ist es der erfindungsgemäßen Flugsimulatorvorrichtung bzw. dessen Trägerfahrzeug ermöglicht, sich frei im Raum zu bewegen. So kann sich das Trägerfahrzeug nicht nur nach vorne, nach hinten oder seitlich bewegen oder Kurven fahren, sondern sich auch z.B. um eine vertikal ausgerichtete Achse drehen. Dadurch kann z.B. ein Schwebeflug eines Drehflügelflugzeugs, insbesondere eines Helikopters, relativ realistisch simuliert werden, da das omnidirektional bewegbare Trägerfahrzeug durch seine Radtechnologie die Möglichkeit bietet, sämtliche horizontalen Bewegungen, welche beim Schwebeflug benötigt werden, abzubilden.

Gemäß einer bevorzugten Variante der erfindungsgemäßen Flugsimulatorvorrichtung weist diese eine an dem Trägerfahrzeug befestigte Vorrichtung zum Heben und Senken der Personenaufnahme auf, welche einen mit der Steuervorrichtung verbundenen Antrieb aufweist. Die Steuervorrichtung ist dann eingerichtet, aufgrund von von den Eingabemitteln stammenden Signalen den Antrieb der Vorrichtung zum Heben und Senken der Personenaufnahme anzusteuern. Mittels dieser Vorrichtung kann somit z.B. auch ein Starten und Landen des zu simulierenden Flugzeugs simuliert werden. Die Vorrichtung zum Heben und Senken der Personenaufnahme umfasst z.B. Antriebe, insbesondere elektrische Antriebe, vorzugsweise geregelte elektrische Antriebe.

Um insbesondere einen Flug eines Drehflügelflugzeugs, insbesondere eines Helikopters, realistischer simulieren zu können, ist gemäß einer Ausführungsform der erfindungsgemäßen Flugsimulatorvorrichtung dessen Vorrichtung zum Heben und Senken der Personenaufnahme derart eingerichtet, die Personenaufnahme zu drehen, zu kippen und/oder zu schwenken. Dadurch können Roll- und Nickbewegungen des zu simulierenden Drehflügelflugzeugs simuliert werden.

Nach einer bevorzugten Ausführungsform der erfindungsgemäßen Flugsimulatorvorrichtung weist die Vorrichtung zum Heben und Senken der Personenaufnahme einen Roboterarm auf, welcher mehrere, hintereinander angeordnete Glieder und mit der Steuervorrichtung verbundene Antriebe zum Bewegen der Glieder aufweist. Die Antriebe des Roboterarms sind insbesondere elektrische Antriebe, vorzugsweise geregelte elektrische Antriebe. Der Roboterarm ist z.B. ein Roboterarm eines Standard-Industrieroboters und umfasst beispielsweise sechs Freiheitsgrade, d.h. z.B. sechs Drehachsen, bezüglich derer sich die Glieder drehen können.

Bei Verwendung eines solchen Roboterarms können zu simulierende Vertikalbewegungen, welche für ein simuliertes Landen bzw. Starten benötigt werden, über die sogenannten Achsen 2 und 3 vollführt werden. Die simulierten Roll- und Nickbewegungen werden beispielsweise über sogenannte Handachsen realisiert.

Nach einer weiteren bevorzugten Variante der erfindungsgemäßen Flugsimulatorvorrichtung weist dessen Roboterarm jedoch keine sechs Freiheitsgrade, sondern genau fünf Freiheitsgrade auf. Dieser Roboterarm umfasst insbesondere ein starr am Trägerfahrzeug befestigtes Gestell, eine Schwinge, einen Ausleger und eine insbesondere mehrachsige Roboterhand. Insbesondere ist die Schwinge am Gestell um eine insbesondere horizontale Drehachse schwenkbar gelagert, und der Ausleger ist insbesondere an der Schwinge um eine insbesondere weitere horizontale Drehachse schwenkbar gelagert. Somit umfasst der Roboterarm dieser Variante kein Karussell, d.h. keine so genannte Achse 1, die vertikal verläuft. Eine Drehung der Personenaufnahme bezüglich einer vertikal verlaufenden Achse kann nämlich aufgrund des omnidirektional bewegbaren Trägerfahrzeugs der erfindungsgemäßen Flugsimulatorvorrichtung realisiert werden, wodurch diese Variante eine Flugsimulation in sechs Freiheitsgraden erlaubt.

Nach einer weiteren Variante der erfindungsgemäßen Flugsimulatorvorrichtung weist die Vorrichtung zum Heben und Senken der Personenaufnahme eine starr am Trägerfahrzeug befestigte Haltevorrichtung auf, an der der Roboterarm bezüglich einer horizontal verlaufenden Drehachse drehbar gelagert ist. Vorzugsweise weist dann der Roboterarm genau drei Freiheitsgrade auf. Insbesondere kann gemäß dieser Variante der Roboterarm einen Ausleger und eine insbesondere mehrachsige Roboterhand aufweisen, wobei der Ausleger an der Haltevorrichtung um eine horizontale Drehachse schwenkbar gelagert ist. Die Vertikalbewegungen, welche für ein simuliertes Landen bzw. Starten benötigt werden, können über die horizontale Drehachse, bezüglich derer der Ausleger an der Haltevorrichtung gelagert ist, vollführt werden. Simulierte Roll- und Nickbewegungen der Personenaufnahme werden über die Handachsen der Roboterhand realisiert. Durch diesen reduzierten Roboterarm kann Masse eingespart werden und damit beispielsweise ein kleineres Trägerfahrzeug verwendet werden.

Die erfindungsgemäße Flugsimulatorvorrichtung kann eine wieder aufladbare Batterie als elektrische Energieversorgung aufweisen.

Die erfindungsgemäße Flugsimulatorvorrichtung kann z.B. in einer Halle mit beispielsweise ca. 30 x 40 m Fläche betrieben werden. Um flexibel zu sein und möglichst die Bewegungen der erfindungsgemäßen Flugsimulatorvorrichtung wenig oder gar nicht einzuschränken, kann z.B. in der Mitte der Hallendecke über einen beweglichen Galgen und einer Zugkette eine Energieversorgung für die erfindungsgemäße Flugsimulatorvorrichtung nach unten z.B. über ein Schlauchpaket auf den Roboterarm oder das Trägerfahrzeug erfolgen. Somit kann die erfindungsgemäße Flugsimulatorvorrichtung eine an einer Decke montierbare Energieversorgung zum Versorgen des Trägerfahrzeugs und der Steuervorrichtung mit elektrischer Energie aufweisen.

Ein weiterer Aspekt der Erfindung betrifft ein Flugsimulatorsystem, aufweisend die erfindungsgemäße Flugsimulatorvorrichtung, eine Projektionsfläche zum Projizieren eines Bildes oder eines Filmes und einen mit der Steuervorrichtung verbundenen Projektor, der eingerichtet ist, gesteuert durch die Steuervorrichtung das Bild oder den Film auf die Projektionsfläche zu projizieren. Dadurch kann der simulierte Flug mit entsprechenden Szenen untermalt werden.

Ausführungsbeispiele der Erfindung sind exemplarisch in den beigefügten schematischen Zeichnungen dargestellt. Es zeigen:
- Fig. 1: eine Flugsimulatorvorrichtung mit einem omnidirektionalen Trägerfahrzeug und einem Roboterarm,
- Fig. 2: ein omnidirektionales Rad,
- Fig. 3: eine externe Energieversorgung der Flugsimulatorvorrichtung,
- Fig. 4: ein die Flugsimulatorvorrichtung aufweisendes Flugsimulatorsystem und
- Fig. 5: eine weitere Flugsimulatorvorrichtung.

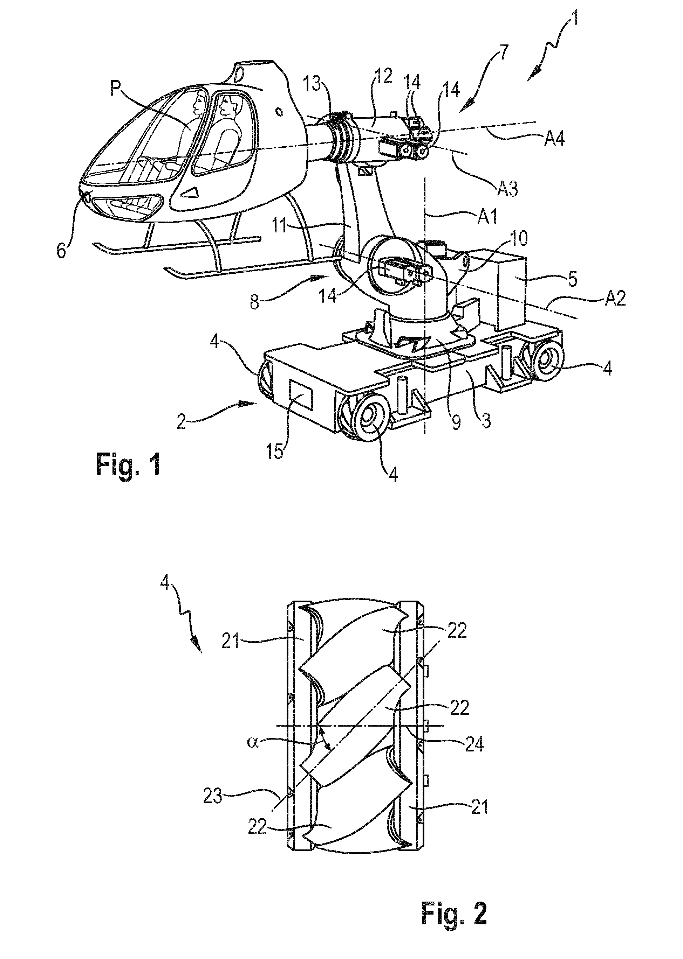

Die Fig. 1 zeigt eine Flugsimulatorvorrichtung 1, welche vorgesehen ist, zumindest einer Person P die Möglichkeit zu verschaffen, das Flugverhalten eines Flugzeugs zu simulieren. Damit wird es der Person P ermöglicht, ohne das zu simulierende Flugzeug zu benützen, dessen Flugverhalten kennen zu lernen, z.B. für Trainingszwecke. Die Flugsimulatorvorrichtung 1 ist insbesondere vorgesehen, das Flugverhalten eines Drehflügelflugzeugs, z.B. eines Helikopters, zu simulieren.

Im Falle des vorliegenden Ausführungsbeispiels weist die Flugzeugsimulatorvorrichtung 1 ein omnidirektional bewegbares Trägerfahrzeug 2 auf. Dieses umfasst z.B. einen Fahrzeuggrundkörper 3 und mehrere, am Fahrzeuggrundkörper 3 drehbar angeordnete Räder 4, welche als omnidirektionale Räder ausgebildet sind. Im Falle des vorliegenden Ausführungsbeispiels weist das Trägerfahrzeug 2 vier omnidirektionale Räder 4 auf. Wenigstens eines der Räder 4, vorzugsweise alle Räder 4 wird bzw. werden mit einem oder mehreren Antrieben angetrieben. Die nicht näher dargestellten Antriebe sind vorzugsweise elektrische Antriebe, insbesondere geregelte elektrische Antriebe und sind mit einer beispielsweise im oder am Fahrzeuggrundkörper 3 angeordneten Steuervorrichtung 5 verbunden, welche eingerichtet ist, das Trägerfahrzeug 2 durch entsprechendes Ansteuern der Antriebe für die Räder 4 zu bewegen.

Ein Beispiel eines omnidirektionalen Rades ist das sogenannte Mecanum-Rad. Ein als omnidirektionales Rad ausgebildetes Rad 4 der Flugsimulatorvorrichtung 1 bzw. dessen Trägerfahrzeugs 2 ist in der Fig. 2 als Frontansicht gezeigt.

Das als omnidirektionales bzw. Mecanum Rad ausgebildete Rad 4 weist im Falle des vorliegenden Ausführungsbeispiels zwei starr miteinander verbundene Radscheiben 21 auf, zwischen denen mehrere Rollkörper 22 bezüglich ihrer Längsachsen 23 drehbar gelagert sind. Die beiden Radscheiben 21 können bezüglich einer Drehachse 24 drehbar gelagert sein und mittels einer der Antriebe des Trägerfahrzeugs 2 derart angetrieben werden, dass sich die beiden Radscheiben 21 bezüglich der Drehachse 24 drehen.

Im Falle des vorliegenden Ausführungsbeispiels sind die Rollkörper 22 gleichmäßig zueinander beabstandet und derart an den Radscheiben 21 gelagert, dass ihre Rollflächen über den Umfang der Radscheiben 21 herausragen. Außerdem sind die Rollkörper 22 derart an den Radscheiben 21 gelagert, dass ihre Längsachsen 23 mit der Drehachse 24 einen Winkel α von beispielsweise 45° aufweisen.

Aufgrund der omnidirektionalen Räder 4 ist es der Flugsimulatorvorrichtung 1 bzw. dessen Trägerfahrzeug 2 ermöglicht, sich frei im Raum zu bewegen. So kann sich das Trägerfahrzeug 2 nicht nur nach vorne, nach hinten oder seitlich bewegen oder Kurven fahren, sondern sich auch z.B. um eine vertikal ausgerichtete Achse A1 drehen.

Die Flugsimulatorvorrichtung 1 weist ferner eine Personenaufnahme 6 zur Aufnahme der Person P auf. Diese umfasst z.B. einen Sitz, auf dem die Person P während einer mittels der Flugsimulatorvorrichtung 1 durchgeführten Flugsimulation sitzt, und Eingabemittel. Insbesondere ist die Personenaufnahme 6 dem Führerstand desjenigen Flugzeugs bzw. Drehflügelflugzeugs nachgebildet, dessen Flugverhalten simuliert werden soll. So sind insbesondere die Eingabemittel der Personenaufnahme 6 den Bedieninstrumenten des zu simulierenden Flugzeugs nachgebildet. Auch kann die Personenaufnahme 6 alle weiteren Instrumente aufweisen, über die das zu simulierende Flugzeug verfügt, um z.B. das Flugverhalten dieses Flugzeugs möglichst genau nachzubilden. Die Eingabemittel bzw. Instrumente der Personenaufnahme 6 sind mit der Steuervorrichtung 5 verbunden.

Um z.B. ein Heben und Senken des Flugzeugs zu simulieren, umfasst die Flugsimulatorvorrichtung 1 eine Vorrichtung 7 zum Heben und Senken der Personenaufnahme insbesondere entlang der Achse A1. Diese ist am Trägerfahrzeug 2, insbesondere an dessen Fahrzeuggrundkörper 3, befestigt. Diese Vorrichtung 7, an der die Personenaufnahme 6 befestigt ist, umfasst einen Antrieb, insbesondere einen elektrischen Antrieb, vorzugsweise einen geregelten elektrischen Antrieb, welcher mit der Steuervorrichtung 5 verbunden ist. Auf der Steuervorrichtung 5 läuft wiederum ein Rechenprogramm, welches aufgrund der von den Eingabemitteln der Personenaufnahme 6 stammenden Signale diesen Antrieb derart ansteuert, sodass die Personenaufnahme 6 mittels der Vorrichtung 7 zum Heben und Senken der Personenaufnahme derart bewegt wird, sodass sich die Personenaufnahme 6 wie von der Person P gewünscht hebt und senkt. Die Vorrichtung 7 zum Heben und Senken der Personenaufnahme ist z.B. als eine Hubvorrichtung, eine vertikal verlaufende Linearachse oder als Hexapod ausgebildet.

Im Falle des vorliegenden Ausführungsbeispiels ist die Vorrichtung 7 zum Heben und Senken der Personenaufnahme auch derart ausgebildet, dass die Personenaufnahme 6 relativ zu einer Achse A4 drehbar ist. Zusätzlich oder alternativ ist die Vorrichtung 7 zum Heben und Senken der Personenaufnahme derart ausgebildet, dass die Personenaufnahme 6 schwenkbar und/oder kippbar ist.

Im Falle des vorliegenden Ausführungsbeispiels ist die Vorrichtung 7 zum Heben und Senken der Personenaufnahme als ein Roboterarm 8 ausgebildet, der am Trägerfahrzeug 2 bzw. an dessen Fahrzeuggrundkörper 3 befestigt ist.

Der Roboterarm 8 umfasst im Falle des vorliegenden Ausführungsbeispiels mehrere, nacheinander angeordnete und mittels Gelenke verbundene Glieder. Bei den Gliedern handelt es sich insbesondere um ein Gestell 9, mittels dem der Roboterarm 8 am Fahrzeuggrundkörper 3 befestigt ist.

Der Roboterarm 7 weist als ein weiteres Glied ein z.B. relativ zum Gestell 9 um die vertikal verlaufende Achse A1 drehbar gelagertes Karussell 10 auf. Da das Trägerfahrzeug 2 sich um die vertikal verlaufende Achse A1 drehen kann, ist im Falle des vorliegenden Ausführungsbeispiels der Roboterarm 8 derart ausgebildet, dass das Karussell 10 starr mit dem Gestell 9 verbunden ist bzw. dass der Roboterarm 8 kein Karussell 10 umfasst.

Weitere Glieder des Roboterarms 8 sind im Falle des vorliegenden Ausführungsbeispiels eine Schwinge 11, ein Ausleger 12 und eine vorzugsweise mehrachsige Roboterhand 13 mit einer als z.B. Flansch ausgeführten Befestigungsvorrichtung zum Befestigen der Personenaufnahme 6. Die Schwinge 11 ist am unteren Ende z.B. an einem nicht näher dargestellten Schwingenlagerkopf auf dem Karussell 10 bzw. dem Gestell 9 um eine vorzugsweise horizontale Drehachse A2 schwenkbar gelagert. Am oberen Ende der Schwinge 11 ist wiederum um eine ebenfalls vorzugsweise horizontale Achse A3 der Ausleger 12 schwenkbar gelagert. Dieser trägt endseitig die Roboterhand 13 mit ihren vorzugsweise drei Drehachsen (Handachsen), von denen nur die Achse A4 der Übersicht halber in der Figur 1 dargestellt ist. Der Roboterarm 8 ist somit im Falle des vorliegenden Ausführungsbeispiels bezüglich fünf Achsen bewegbar.

Der Roboterarm 8 umfasst ferner mit der Steuervorrichtung 5 verbundene Antriebe. Die Antriebe sind im Falle des vorliegenden Ausführungsbeispiels elektrische Antriebe, insbesondere geregelte elektrische Antriebe. In der Figur 1 sind nur einige der elektrischen Motoren 14 dieser Antriebe gezeigt. Der Roboterarm 8 und die Steuervorrichtung 5 sind insbesondere als Standard Industrieroboter ausgeführt, der auf dem Trägerfahrzeug 2 befestigt ist.

Im Betrieb der Flugsimulatorvorrichtung 1 bedient die Person P die Eingabemittel der Personenaufnahme 6. Diese erzeugen Signale, insbesondere elektrische Signale, welche die Steuervorrichtung 5 verarbeitet und daraufhin die Antriebe des Roboterarms 8 und die Antriebe des Trägerfahrzeugs 2 derart ansteuert, sodass die Personenaufnahme 6 eine der Eingabe der Person P entsprechende Bewegung durchführt, um das Flugverhalten des zu simulierenden Flugzeugs zu simulieren.

Für eine elektrische Energieversorgung der Flugsimulationsvorrichtung 1 kann diese wenigstens eine wieder aufladbare Batterie 15 aufweisen, welche z.B. im oder am Fahrzeuggrundkörper 3 des Trägerfahrzeugs 2 angeordnet ist.

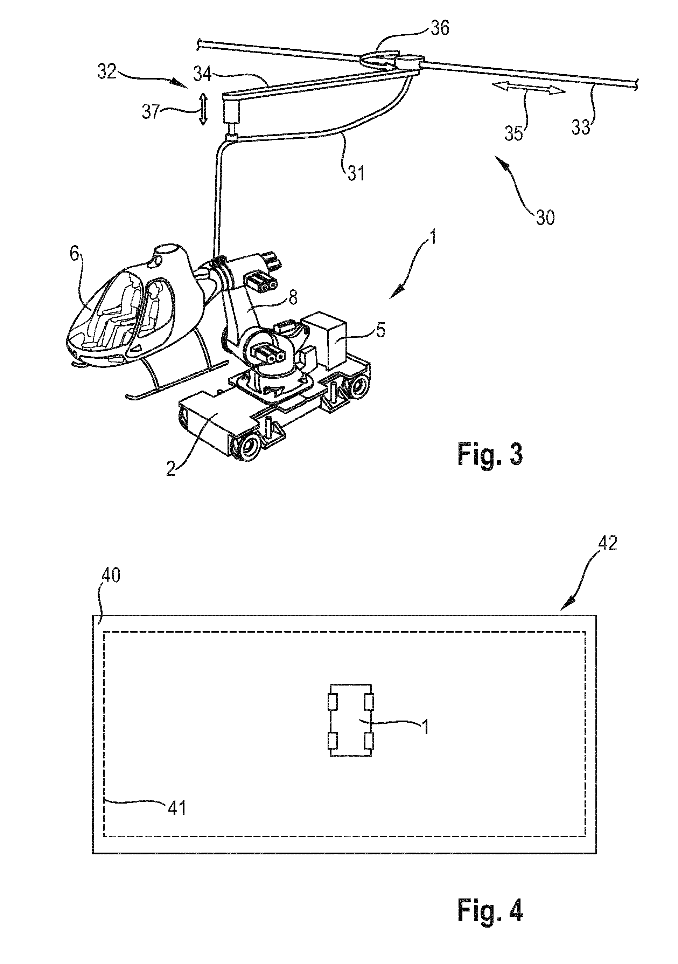

Im Falle des vorliegenden Ausführungsbeispiels weist die Flugsimulatorvorrichtung 1 eine in der Figur 3 gezeigte externe Energieversorgung 30 auf. Diese ist z.B. an einer Decke einer in der Figur 4 gezeigten Halle 40, in der die Flugsimulatorvorrichtung 1 aufgestellt ist, angeordnet. Die externe Energieversorgung 30 ist insbesondere in der Mitte der Decke der Halle 40 befestigt.

Die externe Energieversorgung 30 umfasst insbesondere ein elektrisches Kabel 31, welches z.B. mit dem Roboterarm 8 verbunden ist. Über das Kabel 31 kann die Flugsimulatorvorrichtung 1 mit elektrischer Energie bzw. einer elektrischen Spannung versorgt werden.

Die externe Energieversorgung 30 umfasst im Falle des vorliegenden Ausführungsbeispiels eine Haltevorrichtung 32 zum Halten des Kabels 31. Die Haltevorrichtung 32 umfasst z.B. einen über eine Zugkette 33 beweglichen Galgen 34, über den das Kabel 31 geführt ist. Der Galgen 34 ist längs eines Doppelpfeils 35 längs der Zugkette 33 bewegbar. Der Galgen 34 ist z.B. bezüglich eines Pfeils 36 drehbar. An einem seiner Enden ist das Kabel 31 am Galgen 34 befestigt. Dieses Ende kann derart ausgeführt sein, dass das Kabel 31 längs eines Doppelpfeils 36 bewegbar ist.

Im Falle des vorliegenden Ausführungsbeispiels ist wenigstens eine der Wände der Halle 40, vorzugsweise alle Wände der z.B. rechteckig ausgeführten Halle 40 mit einer Projektionsfläche versehen bzw. als Projektionswand 41 ausgeführt. Dadurch ist es möglich, auf die als Projektionswand 41 ausgeführte Wand der Halle 40 Bilder einer simulierten Umgebung für den simulierten Flug zu Projizieren. Diese Bilder werden z.B. mittels eines nicht näher dargestellten Projektors auf die Projektionswand 41 projiziert. Der Projektor ist z.B. mit der Steuervorrichtung 5 verbunden, um von dieser angesteuert zu werden. Eine Kommunikationsverbindung zwischen der Steuervorrichtung 5 und dem Projektor ist z.B. drahtlos realisiert. Die Kommunikationsverbindung kann aber auch über die externe Energieversorgung 30 erfolgen, z.B. über eine zusätzliche, neben dem Kabel 31 und mittels einer mit der Haltevorrichtung 32 geführten Signalleitung. Die Halle 40 mit der Projektionswand 41 und der Flugsimulatorvorrichtung 1 bilden ein Flugsimulatorsystem 42.

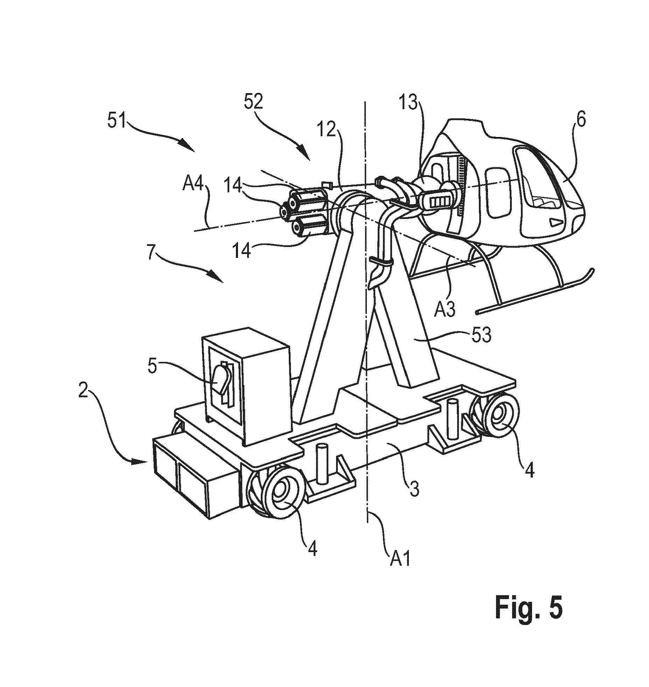

Die Figur 5 zeigt eine weitere Flugsimulatorvorrichtung 51. Wenn nicht anders beschrieben, dann sind Bestandteil der in der Figur 5 gezeigten Flugsimulatorvorrichtung 51, welche mit Bestandteilen der in der Figur 1 gezeigten Flugsimulatorvorrichtung 1 im Wesentlichen bau- und funktionsgleich sind, mit denselben Bezugszeichen versehen.

Die beiden Flugsimulatorvorrichtungen 1, 51 unterscheiden sich im Wesentlichen durch ihre Vorrichtung 7 zum Heben und Senken der Personenaufnahme.

Diese Vorrichtung 7 umfasst zwar auch einen Roboterarm 52 mit mehreren, hintereinander angeordneten Gliedern. Im Unterschied zum Roboterarm 8 der in der Figur 1 gezeigten Flugsimulatorvorrichtung 1 weist der Roboterarm 52 der in der Figur 5 gezeigten Flugsimulatorvorrichtung 51 kein Gestell, kein Karussell und keine Schwinge auf. Der Roboterarm 52 umfasst im Wesentlichen lediglich den Ausleger 12 und die vorzugsweise mehrachsige Roboterhand 13 mit der z.B. als Flansch ausgeführten Befestigungsvorrichtung zum Befestigen der Personenaufnahme 6.

Die Vorrichtung 7 zum Heben und Senken der Personenaufnahme der Flugsimulatorvorrichtung 51 umfasst ferner einen starr mit dem Trägerfahrzeug 2 bzw. dessen Fahrzeuggrundkörper 3 verbundene Haltevorrichtung 53, an deren oberen Ende der Roboterarm 52 bzw. dessen Ausleger 12 um eine die vorzugsweise horizontale Achse A3 schwenkbar gelagert ist. Dieser trägt endseitig die Roboterhand 13 mit ihren vorzugsweise drei Drehachsen (Handachsen), von denen nur die Achse A4 der Übersicht halber in der Figur 5 dargestellt ist. Der Roboterarm 52 ist somit im Falle des vorliegenden Ausführungsbeispiels bezüglich vier Achsen bewegbar.

## Patentansprüche

1. Flugsimulatorvorrichtung zum Simulieren eines Flugverhalten eines Flugzeugs, insbesondere eines Drehflügelflugzeugs, aufweisend
- eine Eingabemittel aufweisende Personenaufnahme (6) zur Aufnahme zumindest einer Person (P),
- ein omnidirektional bewegbares Trägerfahrzeug (2) mit mehreren Rädern (4) und mit Antrieben zum Antreiben der Räder (4), und
- eine mit den Eingabemitteln und den Antrieben des Trägerfahrzeugs (2) verbundene Steuervorrichtung (5), welche eingerichtet ist, aufgrund von von den Eingabemitteln stammenden Signalen die Antriebe der Trägervorrichtung (2) anzusteuern.

2. Flugsimulatorvorrichtung nach Anspruch 1, bei dem die Räder (4) des Trägerfahrzeugs (2) als omnidirektionale Räder ausgebildet sind.

3. Flugsimulatorvorrichtung nach Anspruch 1 oder 2, aufweisend eine an dem Trägerfahrzeug (2) befestigte Vorrichtung (7) zum Heben und Senken der Personenaufnahme (6), welche einen mit der Steuervorrichtung (5) verbundenen Antrieb aufweist, wobei die Steuervorrichtung (5) eingerichtet ist, aufgrund von von den Eingabemitteln stammenden Signalen den Antrieb der Vorrichtung (7) zum Heben und Senken der Personenaufnahme (6) anzusteuern.

4. Flugsimulatorvorrichtung nach Anspruch 3, dessen Vorrichtung (7) zum Heben und Senken der Personenaufnahme eingerichtet ist, die Personenaufnahme (6) zu drehen, zu kippen und/oder zu schwenken.

5. Flugsimulatorvorrichtung nach Anspruch 3 oder 4, bei der die Vorrichtung (7) zum Heben und Senken der Personenaufnahme (6) einen Roboterarm (1, 51) aufweist, welcher mehrere, hintereinander angeordnete Glieder (9-13) und mit der Steuervorrichtung (5) verbundene Antriebe zum Bewegen der Glieder (9-13) aufweist.

6. Flugsimulatorvorrichtung nach Anspruch 5, bei der der Roboterarm (1) genau fünf Freiheitsgrade aufweist und insbesondere ein starr am Trägerfahrzeug (2) befestigtes Gestell (9), eine Schwinge (11), einen Ausleger (12) und eine insbesondere mehrachsige Roboterhand (13) aufweist, wobei insbesondere die Schwinge (11) am Gestell (9) um eine insbesondere horizontale Drehachse (A2) schwenkbar gelagert ist und der Ausleger (12) an der Schwinge (11) um eine insbesondere weitere horizontale Drehachse (A3) schwenkbar gelagert ist.

7. Flugsimulatorvorrichtung nach Anspruch 5, bei der die Vorrichtung (7) zum Heben und Senken der Personenaufnahme eine starr am Trägerfahrzeug (2) befestigte Haltevorrichtung (53) an der der Roboterarm (51) bezüglich einer horizontal verlaufenden Drehachse (A3) drehbar gelagert ist.

8. Flugsimulatorvorrichtung nach Anspruch 7, bei der der Roboterarm (51) genau drei Freiheitsgrade aufweist, wobei insbesondere der Roboterarm (51) einen Ausleger (12) und eine insbesondere mehrachsige Roboterhand (13) aufweist, wobei der Ausleger (12) an der Haltevorrichtung (53) um die horizontale Drehachse (A3) schwenkbar gelagert ist.

9. Flugsimulatorvorrichtung nach einem der Ansprüche 1 bis 8, aufweisend eine an einer Decke montierbare Energieversorgung (30) zum Versorgen des Trägerfahrzeugs (2) und der Steuervorrichtung (5) mit elektrischer Energie.

10. Flugsimulatorsystem, aufweisend eine Flugsimulatorvorrichtung (1, 51) nach einem der Ansprüche 1 bis 9, eine Projektionsfläche zum Projizieren eines Bildes oder eines Filmes und einen mit der Steuervorrichtung (5) verbundenen Projektor, der eingerichtet ist, gesteuert durch die Steuervorrichtung (5) das Bild oder den Film auf die Projektionsfläche zu projizieren.
